(19) Europäisches Patentamt
European Patent Office
Office européen des brevets

(11) **EP 3 070 505 B1**

(12) **FASCICULE DE BREVET EUROPEEN**

(45) Date de publication et mention de la délivrance du brevet:
**18.04.2018 Bulletin 2018/16**

(51) Int Cl.:
*G02B 7/36* (2006.01)      *G03B 13/36* (2006.01)
*H04N 5/232* (2006.01)

(21) Numéro de dépôt: **16160005.1**

(22) Date de dépôt: **11.03.2016**

(54) **PROCEDE ET SYSTEME DE MISE AU POINT AUTOMATIQUE D'UNE CAMERA**

VERFAHREN UND SYSTEM ZUR AUTOMATISCHEN EINSTELLUNG EINER KAMERA

METHOD AND SYSTEM FOR AUTOMATICALLY FOCUSING A CAMERA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.03.2015 FR 1552334**

(43) Date de publication de la demande:
**21.09.2016 Bulletin 2016/38**

(73) Titulaire: **COMMISSARIAT À L'ÉNERGIE ATOMIQUE ET AUX ÉNERGIES ALTERNATIVES**
**75015 Paris (FR)**

(72) Inventeurs:
• **ZARUDNIEV, Mykhailo**
**04213 KIEV (UA)**

• **LESECQ, Suzanne**
**38190 FROGES (FR)**
• **TONDA, Arnaud**
**38100 GRENOBLE (FR)**

(74) Mandataire: **Priori, Enrico et al**
**Marks & Clerk France**
**Conseils en Propriété Industrielle**
**Immeuble «Visium»**
**22, avenue Aristide Briand**
**94117 Arcueil Cedex (FR)**

(56) Documents cités:
**US-A- 5 923 371      US-A1- 2009 160 999**
**US-A1- 2011 069 190**

EP 3 070 505 B1

**Description**

L'invention porte sur un procédé de mise au point automatique d'une caméra, ou « autofocus ». L'invention porte également sur un système de mise au point automatique mettant en oeuvre un tel procédé, ainsi que sur une caméra - et plus particulièrement une caméra numérique - équipée d'un tel système.

Il existe, dans la littérature et sur le marché, plusieurs méthodes de mise au point automatique, qui peuvent être regroupées en deux grandes familles : les approches en boucle ouverte et celles en boucle fermée.

Les approches en boucle ouverte nécessitent un capteur de distance, par exemple un capteur à temps de vol ; pour cette raison on parle également d'approches « actives ». Un contrôleur en boucle ouverte reçoit en entrée un signal issu de ce capteur, représentatif de la distance d'un sujet à imager, et s'en sert pour générer un signal de pilotage d'un actionneur, qui agit sur un paramètre de mise au point de la caméra. Ce dernier peut être la distance entre une lentille et un capteur d'image, ou bien la vergence de la lentille si cette dernière est déformable. Typiquement, le contrôleur ne fait qu'appliquer un tableau prédéfini mettant en correspondance une distance mesurée par le capteur et un niveau de tension, ou de courant, fourni à l'actionneur. Cette approche a l'avantage d'être très rapide. Cependant, elle présente de nombreux inconvénients : le surcout lié à l'utilisation d'un capteur actif de distance, la nécessité d'effectuer un étalonnage pour construire le tableau de correspondance du contrôleur en boucle ouverte et de le répéter périodiquement pour compenser les dérives du module optique et de l'actionneur, la sensibilité aux perturbations non mesurables qui empêchent de garantir un niveau de précision (manque de robustesse). Un exemple d'autofocus en boucle ouverte, ou actif, est donné par le document US 6, 292, 256.

Les approches en boucle fermée n'utilisent pas un capteur de distance (on parle donc d'approches « passives »), mais un module d'estimation de qualité qui extrait une métrique de qualité - typiquement, de netteté - de l'image obtenue. Cette estimation est comparée à une valeur de référence pour fournir un signal d'erreur ; un contrôleur en boucle fermée agit sur un actionneur de manière à minimiser ce signal d'erreur. Parmi les avantages de cette approche on peut mentionner l'absence d'un capteur actif de distance, ainsi que la prise en compte des perturbations et des dérives sans besoin d'étalonnage. Par contre, pour que la performance du système soit robuste aux incertitudes sur les performances du module optique (par exemple liées à la variabilité technologique), la loi de commande doit être choisie judicieusement, ce qui nécessite une expertise certaine de la part du concepteur. En outre, la rapidité est réduite par rapport aux systèmes en boucle ouverte.

Il existe une grande variété d'approches en boucle fermée.

Une solution conventionnelle consiste à effectuer la recherche du maximum de la netteté (indicateur de qualité de l'image) en utilisant une méthode dite de « grimpage » sur la courbe de netteté. Pour ceci, l'estimateur de netteté d'image reçoit une matrice de signaux du capteur d'image et s'en sert pour calculer un indicateur de netteté « n » selon une métrique choisie. Ensuite (en considérant, par simplicité, le seul cas d'un système avec lentille à focale variable), la valeur $y = \partial n/ \partial f$ du gradient de la netteté est calculée par rapport à la focale de la lentille f ; cela permet de déterminer la direction de la commande à appliquer. Une loi de commande de type intégrale est utilisée par la suite, ce qui permet de déformer la lentille de manière à s'approcher du maximum de la netteté. Cette solution présente un certain nombre d'inconvénients. Tout d'abord, le calcul du gradient de netteté est, par nature, très sensible au bruit. En outre, le signal de commande de l'actionneur est typiquement quantifié, ce qui implique que toutes les longueurs focales dans un intervalle continu donné $[f_{min}, f_{max}]$ ne sont pas réellement accessibles, ce qui induit une dégradation de la précision de mise au point. La diminution du pas de quantification permet d'améliorer la précision de la mise au point, mais au prix d'une augmentation du temps de convergence et de la consommation électrique. Des oscillations parasites peuvent également se produire autour de la valeur optimale de netteté.

L'article de Jie He et al. « Modified Fast Climbing Search Auto-focus Algorithm with Adaptive Step Size Searching Technique for Digital Camera », IEEE Transaction on Consumer Electronics, 49(2) : 257 - 262 (2003) décrit un perfectionnement de cette approche, dans lequel le pas de quantification est choisi en fonction de la proximité au maximum (plus grand loin du maximum, d'autant plus faible qu'on s'y approche). Cela permet, au moins en principe, d'améliorer le temps de réponse et la consommation électrique. Toutefois, il n'est pas simple de déterminer de manière fiable la proximité du maximum : en effet le gradient de netteté est généralement faible aussi bien près des conditions optimales de mise au point que lorsqu'on en est très éloignés. En pratique, les règles de réadaptation du gain sont choisies en supposant une connaissance a priori du comportement du module optique. Or, dans les cas d'utilisation réels, ce comportement est souvent différent de celui modélisé - à cause, par exemple, de la variabilité technologique et des dérives en température - ce qui implique une perte en performance de la mise au point

Une autre possibilité consiste à utiliser un contrôleur de type PID (proportionnel - intégrale - dérivée), avec deux degrés de liberté en plus par rapport à la commande purement intégrale considérée plus haut. Un avantage de cette approche est que plusieurs méthodes éprouvées de conception des contrôleurs PID sont décrites dans la littérature. Toutefois, ce type de commande n'est envisageable que lorsque le capteur d'image numérique ainsi que le bloc d'analyse de la netteté d'image fonctionnent avec une rapidité comparable ou supérieure à celle de l'actionneur de la lentille (« lentille lente »). En outre, le modèle pour lequel le contrôleur PID a été réglé ne permet pas de minimiser le temps de réponse du système de mise au point car le modèle du module optique change en fonction de la scène considérée. En outre, la variabilité technologique ou encore les dérives en température impliquent que le module réel suit un modèle différent de celui utilisé pour régler le contrôleur.

Encore une autre possibilité consiste à adopter une approche prédictive, voir par exemple l'article de L.I.-C. Chiu et al. « An efficient auto focus method for digital still camera based on focus value curve prediction model », Journal of Information Science and Engineering, 26(4): 1261-1272, (2010). Dans cette approche, on suppose un modèle mathématique de la netteté en fonction de la position de la lentille donné par une somme de courbes en forme de cloche, dont les paramètres doivent être identifiés. Les résultats présentés suggèrent que cette méthode permet une convergence très rapide, au moins en présence d'un seul pic de netteté - ce qui, typiquement, correspond à la présence d'un seul objet dans la scène imagée. Toutefois, en présence d'une pluralité d'objets, l'identification des paramètres du modèle constitue un problème non-linéaire et, en général, non-convexe, dont la complexité computationnelle risque de devenir prohibitive.

Le document US2011069190 décrit un procédé de mise au point automatique suivant le préambule de la revendication 1. L'invention vise à surmonter, en tout ou en partie, au moins certains des inconvénients précités. Plus précisément, l'invention vise à procurer un procédé de mise au point automatique qui soit à la fois robuste et rapide et qui ne nécessite pas l'utilisation d'un capteur actif de distance. L'invention vise en particulier à procurer un tel procédé, qui soit bien adapté au cas d'une « lentille rapide », c'est-à-dire à une caméra dans lequel le temps de réponse de l'actionneur et du module optique est inférieur au temps nécessaire à l'acquisition des images et au calcul d'une métrique de netteté.

Un objet de l'invention, permettant d'atteindre ce but, est un procédé de mise au point automatique d'une caméra comprenant un capteur d'images, au moins une lentille configurée pour projeter une image sur ledit capteur et un actionneur configuré pour modifier un paramètre de mise au point de la lentille, le procédé comportant :

- une première phase comprenant :

  ◦ un pilotage en boucle ouverte dudit actionneur, pour que ledit paramètre de mise au point prenne successivement une pluralité de valeurs prédéfinies ;
  ◦ l'acquisition d'une pluralité d'images au moyen dudit capteur, correspondant chacune à une dite valeur prédéfinie du paramètre de mise au point ; et
  ◦ le calcul d'un indicateur de netteté à partir de chacune desdites images ;

  et
- une deuxième phase de pilotage en boucle fermée dudit actionneur pour maximiser ledit indicateur de netteté ;

ladite deuxième phase de pilotage en boucle fermée étant mise en oeuvre en utilisant une loi de commande et des conditions d'initialisation déterminées à partir des indicateurs de netteté calculés lors de ladite première phase.

Selon des modes de réalisation particulier d'un tel procédé :

- Ladite deuxième phase de pilotage en boucle fermée peut être initialisée par la valeur du paramètre de mise au point qui correspond à la valeur la plus élevée de l'indicateur de netteté calculée au cours de ladite première phase.
- Ladite deuxième phase de pilotage en boucle fermée peut utiliser un gain adaptatif.
- Ladite deuxième phase de pilotage en boucle fermée peut réaliser une maximisation itérative de l'indicateur de netteté basée sur une relation quadratique estimée reliant ledit indicateur de netteté et ledit paramètre de mise au point.
- Plus particulièrement, ladite deuxième phase de pilotage en boucle fermée peut comprendre, à chaque itération, une actualisation de ladite relation quadratique estimée pour tenir compte d'une valeur d'indicateur de netteté déterminée lors de l'itération précédente.
- Plus particulièrement, ladite deuxième phase de pilotage en boucle fermée peut comprendre les étapes suivantes :

  a) la détermination, parmi les valeurs prédéfinies du paramètre de mise au point utilisées lors de ladite première phase, de celle correspondant à la valeur la plus élevée de l'indicateur de netteté calculée au cours de ladite première phase, indiquée par $V^{max}$ ; de celle immédiatement supérieure indiquée par $V^{right}$; et de celle immédiatement inférieure indiquée par $V^{left}$ ;
  b) le calcul d'une valeur $V_i^*$ du paramètre de mise au point maximisant une relation quadratique reliant ledit indicateur de netteté et ledit paramètre de mise au point, estimée à partir des valeurs du paramètre de mise au point précédemment déterminées et des valeurs correspondantes de l'indicateur de netteté ;
  c) le pilotage dudit actionneur pour que le paramètre de mise au point prenne la valeur calculée lors de l'étape précédente ; l'acquisition, au moyen dudit capteur, d'une image correspondant à ladite valeur du paramètre de mise au point et le calcul d'un indicateur de netteté de ladite image ;

les étapes b) et c) étant répétées de manière itérative jusqu'à ce qu'une condition d'arrêt ne soit satisfaite.

- Encore plus particulièrement, le calcul de l'étape b) est réalisé par application d'une formule analytique.
- En outre, lors de ladite étape b), ladite valeur du paramètre de mise au point, désignée par $V_i^*$, peut être calculée en appliquant les formules :

$$\hat{a}_i = \frac{2}{L+1} \sum_{l=0}^{L} \frac{(V_{i-l+1} - V_{i-l})(n_{i-l+2} - n_{i-l+1}) - (V_{i-l+2} - V_{i-l+1})(n_{i-l+1} - n_{i-l})}{(V_{i-l+2} - V_{i-l+1})(V_{i-l+1} - V_{i-l})(V_{i-l+2} - V_{i-l})}$$

$$\hat{b}_i = \frac{1}{L+1} \sum_{l=0}^{L} \left( \frac{n_{i-l+1} - n_{i-l}}{V_{i-l+1} - V_{i-l}} - \right.$$
$$- (V_{i-l}$$
$$+ V_{i-l+1}) \left. \frac{(V_{i-l+1} - V_{i-l})(n_{i-l+2} - n_{i-l+1}) - (V_{i-l+2} - V_{i-l+1})(n_{i-l+1} - n_{i-l})}{(V_{i-l+2} - V_{i-l+1})(V_{i-l+1} - V_{i-l})(V_{i-l+2} - V_{i-l})} \right)$$

$$V_i^* = -\frac{\hat{b}_i}{\hat{a}_i}$$

où i est l'indice de l'itération en cours, L est un entier non négatif inférieur ou égal à i, $V_l$ est un élément du vecteur $\mathbf{V}_l$ comprenant les valeurs $V_i^*$ déterminées auparavant, ainsi que lesdites valeurs $V^{left}$, $V^{max}$, $V^{right}$, ces valeurs étant prises en ordre croissant, et $n_l$ est la valeur de l'indicateur de netteté mesuré lorsque le paramètre de mise au point prend la valeur $V_l$.

- En variante, lors de ladite étape b), ladite valeur du paramètre de mise au point, désignée par $V_i^*$, peut être calculée en appliquant les formules :

$$\hat{a}_i = \frac{1}{M} \sum_{(i,j) \in \Omega} \frac{\mathcal{G}_i - \mathcal{G}_j}{V_i - V_j}$$

$$\hat{b}_i = \frac{1}{L-1} \sum_{l=1}^{L-1} \left( \mathcal{G}_l - \hat{a} V_l \right)$$

$$V_i^* = -\frac{\hat{b}_i}{\hat{a}_i}$$

où i est l'indice de l'itération en cours, $\Omega$ l'ensemble de tous les couples d'indices *l* non répétées de valeurs comprises entre max(0,i-L) et i, L étant un entier non négatif inférieur ou égal à i, $V_l$ est un élément du vecteur $\mathbf{V}_l$ comprenant les valeurs $V_i^*$ déterminées auparavant, ainsi que lesdites valeurs $V^{left}$, $V^{max}$, $V^{right}$, ces valeurs étant prises en ordre croissant, $n_l$ est la valeur de l'indicateur de netteté mesuré lorsque le paramètre de mise

$$\mathcal{G}_l = \frac{n_{l+1} - n_l}{V_{l+1} - V_l}.$$

au point prend la valeur $V_l$ et

- Ladite première phase peut comprendre également une étape de sélection, par un utilisateur, d'une loi d'échantillonnage d'une plage de valeur du paramètre de mise au point, et dans lequel lesdites valeurs prédéfinies dudit paramètre de mise au point sont obtenues en échantillonnant ladite plage suivant ladite loi.
- Ledit paramètre de mise au point peut être choisi parmi :

  - la position de la lentille par rapport au détecteur le long d'un axe optique ; et
  - la vergence de la lentille.
- Entre la fin de la première phase et le début de la deuxième phase, ledit actionneur peut être piloté pour que ledit paramètre de mise au point reprenne sa valeur initiale.

Un autre objet de l'invention est un système de mise au point automatique d'une caméra comprenant :

- un actionneur configuré pour modifier un paramètre de mise au point d'une lentille de la caméra ; et
- un processeur configuré pour recevoir en entrée un signal représentatif d'une image acquise par un capteur d'image de la caméra et pour produire à sa sortie un signal de pilotage dudit actionneur ;

caractérisé en ce que ledit processeur est configuré ou programmé pour mettre en oeuvre un tel procédé.

Encore un autre objet de l'invention est une caméra comprenant un capteur d'images, au moins une lentille configurée pour projeter une image sur ledit capteur et un tel système de mise au point automatique dont l'actionneur est configuré pour modifier un paramètre de mise au point de ladite lentille et le processeur est configuré pour recevoir en entrée un signal représentatif d'une image acquise par ledit capteur.

Dans une telle caméra, ladite lentille peut notamment être une lentille à focale variable et ledit actionneur peut alors être configuré pour modifier la focale de la lentille.

D'autres caractéristiques, détails et avantages de l'invention ressortiront à la lecture de la description faite en référence aux dessins annexés donnés à titre d'exemple et qui représentent, respectivement :

- La figure 1, le schéma fonctionnel d'une caméra selon un mode de réalisation de l'invention ;
- La figure 2, un ordinogramme d'un procédé selon un mode de réalisation de l'invention ;
- La figure 3, un schéma fonctionnel illustrant la loi de commande selon un mode de réalisation de l'invention ;
- Les figures 4a, 4b et 4c, des graphiques illustrant trois modes de réalisation possibles de la première phase de commande en boucle ouverte.
- Les figures 5a et 5b, des illustrations de la mise en oeuvre de la deuxième phase de commande en boucle fermée selon deux modes de réalisation alternatifs de l'invention ; et
- Les figures 6a, 6b, 7a, 7b, 8a et 8b, des graphiques illustrant le résultat technique de l'invention.

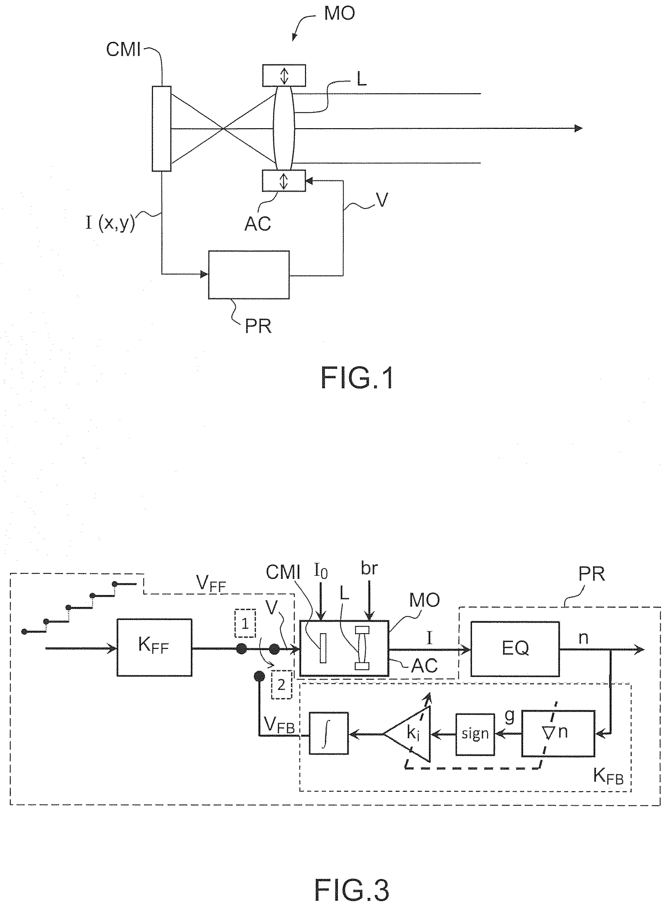

La figure 1 montre un schéma fonctionnel simplifié d'une caméra numérique avec mise au point automatique en boucle fermée, pouvant convenir à la mise en oeuvre de l'invention. Cette caméra comprend essentiellement un module optique MO, un capteur matriciel d'image CMI et un processeur PR. A son tour, le module optique comprend au moins une lentille L et un actionneur AC qui permet de modifier au moins un paramètre optique du module. Dans l'exemple de la figure, la lentille L est déformable et l'actionneur AC permet de modifier sa vergence ; dans d'autres modes de réalisation, l'actionneur pourrait déplacer la lentille le long de son axe focal par rapport au capteur CMI. La lentille forme une image sur le capteur CMI, qui produit un signal électronique l(x,y), où x et y sont des indices discrets identifiant les pixels du capteur. Ce signal est fourni au processeur PR qui s'en sert, entre autres, pour générer un signal V de pilotage de l'actionneur, conformément au principe de l'autofocus en boucle fermée. La caméra peut être intégrée à un autre appareil, tel qu'un téléphone portable.

Une idée à la base de l'invention consiste à utiliser un procédé de mise au point automatique comportant deux phases : une première phase en boucle ouverte, mais n'utilisant pas de capteur actif de distance, et une deuxième phase en boucle fermée. La première phase consiste en une exploration sommaire d'un espace de configurations de mise au point ; typiquement, il s'agit d'essayer une série de valeurs prédéfinies de la vergence de la lentille, de sa position ou de tout autre paramètre représentatif des conditions de mise au point. Une image est acquise pour chacune de ces configurations de mise au point, et sa valeur de netteté est calculée par le processeur. Cela permet :

1) de déterminer une condition initiale suffisamment proche de l'optimum de netteté ;
2) de déterminer une loi de commande optimale.

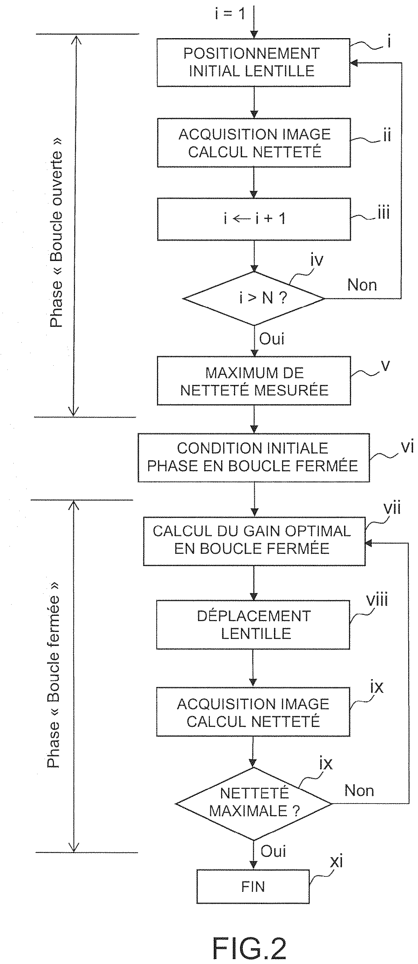

La figure 2 montre un ordinogramme d'un procédé mettant en oeuvre ce principe. Dans la discussion de cet ordinogramme on considèrera le cas où la mise au point est réalisée en déplaçant la lentille, mais il ne s'agit là que d'un exemple prédéfini.

L'étape i consiste à positionner la lentille à une première position prédéterminée (ou à régler sa vergence à une première valeur prédéterminée). Ensuite (ii) on acquiert une image correspondant à cette position de la lentille et on calcule la valeur de sa netteté. Plusieurs métriques de netteté pouvant être appliquées à l'invention sont décrites dans l'article de S. Pertuz et al. « Analysis of focus measure operators for shape-from-focus » Pattern Recognition, 46(5): 1415 - 1432, 2013. Ensuite (iii) un compteur i, initialisé à 1, est incrémenté, et ces opérations sont itérées tant que sa valeur n'excède pas un maximum prédéfini N (iv). Typiquement, le nombre d'itérations est compris entre 3 et 7 voire 10. A la fin de cette première phase en boucle ouverte on dispose donc de N mesures de netteté, correspondant à autant de positions différentes de la lentille. On peut donc déterminer le maximum des valeurs de netteté mesurée (vi), ce qui permet de calculer une condition initiale $V^{max}$, c'est-à-dire la valeur attribuée au signal de pilotage de l'actionneur au début de la phase de commande en boucle fermée (vi).

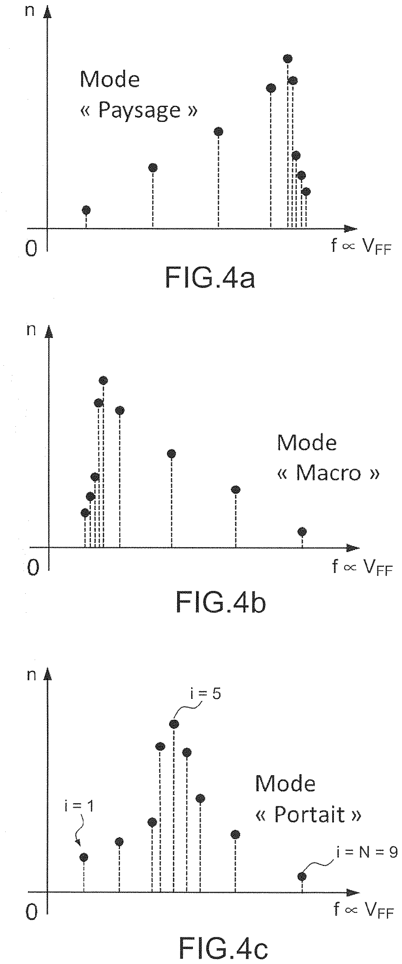

Il est utile de noter que, lors de la phase en boucle ouverte, l'échantillonnage de l'espace de paramètres de mise au point n'est pas nécessairement uniforme. A titre d'exemple, on peut considérer un appareil photographique dans lequel l'utilisateur peut sélectionner un mode « paysage », un mode « macro » et un mode « portrait ». Dans le mode « paysage » (cf. fig. 4A) la région des faibles focales « f » est échantillonnée très grossièrement, et la plupart des valeurs prédéfinies testées sont proches de l'infini, où se trouve vraisemblablement le maximum de la netteté n. En d'autres termes, le pas d'avancement de la lentille diminue progressivement. Dans le mode « macro », au contraire, on échantillonne préférentiellement les faibles focales (fig. 4B). Et dans le mode « portrait » (fig. 4C) la plupart des focales échantillonnes présentent des valeurs intermédiaires. Sur les figures 4A - 4C, la netteté n peut être exprimée indifféremment en fonction de la focale f ou du signal de commande $V_{FF}$ (« FF », pour « feed-forward », boucle ouverte en anglais), ces deux grandeurs étant liées par une relation (non nécessairement linéaire) propre à l'actionneur. Dans la suite on utilisera l'expression « paramètre de mise au point » pour désigner, indifféremment, un paramètre optique tel que la vergence d'une lentille ou sa distance du capteur d'image, ou la valeur correspondante du signal de pilotage de l'actionneur.

Si on considère, par exemple, le cas de la figure 4C, on remarque que 9 valeurs de focale sont échantillonnées (N=9) ; on considère qu'elles sont parcourues dans l'ordre, à partir de la focale la plus faible (pour i=1) jusqu'à la plus élevée (i=N=9). Le maximum de netteté correspond au cas i=5. Pour y parvenir à partir de la condition finale i=N=9 il faudrait déplacer la lentille vers l'arrière (c'est-à-dire dans un sens opposé à celui du déplacement effectué au cours de la phase en boucle ouverte). Cependant, certains actionneurs présentent une hystérésis ; il peut donc être préférable, du point de vue de la précision, de repositionner la lentille à sa position initiale (i=1), qui correspond typiquement à un bout de course, et à l'avancer jusqu'à la position optimale. Cette approche pour diminuer l'influence de l'hystérésis n'est intéressante que si la lentille possède un temps de réponse très inférieur au temps de cadencement de l'imageur, puisque la limitation temporelle viendra du temps nécessaire au positionnement dans un état stable (i.e. après les transitoires) de la lentille. Aujourd'hui, les imageurs des caméras fonctionnent généralement à une rapidité de 60 images par seconde (« fps », de l'anglais « frame per second »), ce qui correspond à un intervalle entre les acquisitions d'images égal à 17 ms.

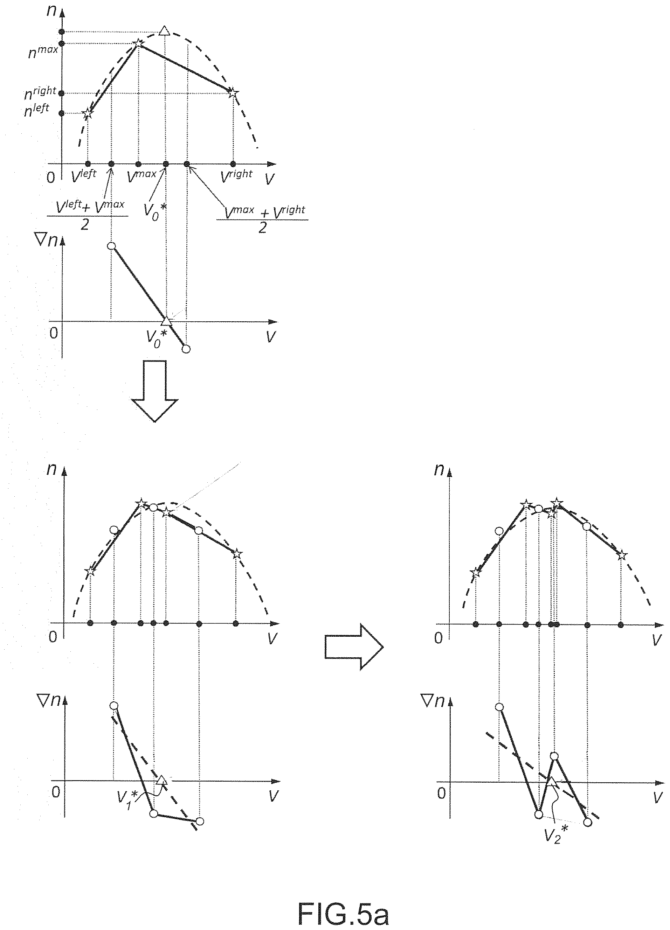

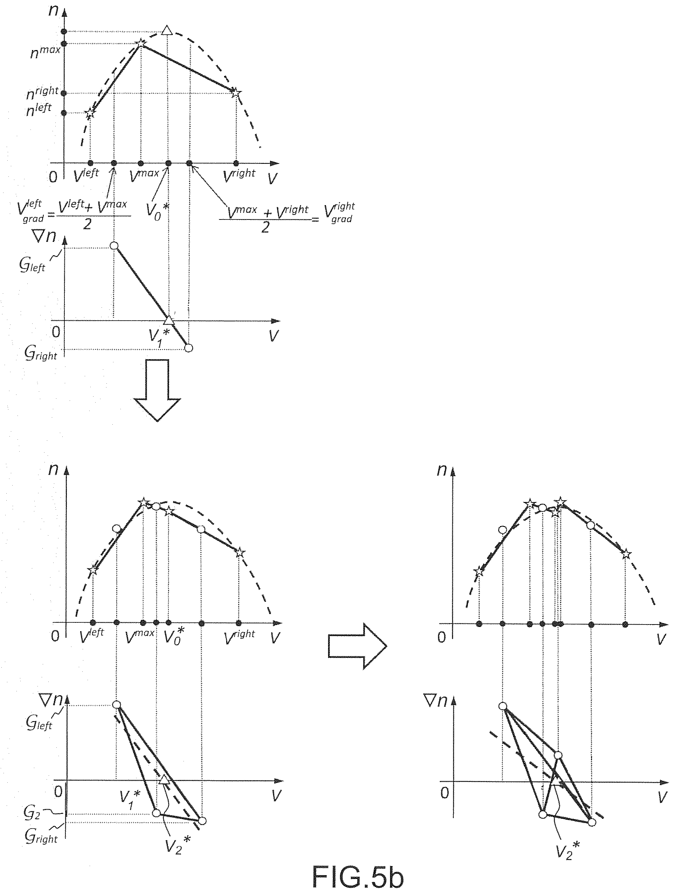

Commence ensuite la phase de commande en boucle fermée. En revenant à la figure 2, on peut voir que la première étape de cette deuxième phase est le calcul du gain « optimal » de la loi de commande en boucle fermée (vi) à partir des paires « paramètre de mise au point - netteté d'image » acquises en précédence. La mise en oeuvre de cette étape selon un mode de réalisation avantageux de l'invention, sera détaillée plus loin en référence à la figure 5. Ensuite la lentille est déplacée (viii) en fonction du gain calculé à l'étape précédente, une image est acquise et la netteté correspondante est calculée (ix). Si le maximum de netteté est atteint (ce qui est typiquement déterminé en vérifiant que le dernier déplacement était inférieur à un seuil), le procédé s'arrête ; autrement, on procède à une nouvelle itération (x). Il est important de noter que, lors des itérations autres que la première, le calcul du gain (étape vii) se fait en prenant en compte aussi les mesures de netteté effectuée au cours de la phase en boucle fermée.

La figure 3 illustre un diagramme fonctionnel d'un système de mise au point automatique mettant en oeuvre le procédé de la figure 2. L'ensemble constitué par le module optique et le capteur d'image reçoit en entrée une distribution spatiale d'intensité lumineuse $I_0$, un bruit br, et un signal de commande V qui en détermine au moins un paramètre de mise au point ; il fournit à sa sortie un signal électronique I, représentatif d'une image.

Un commutateur permet de choisir entre la commande en boucle ouverte (position 1) et en boucle fermée (position 2). Le contrôleur en boucle ouverte correspond à un bloc de gain statique $K_{FF}$ recevant en entrée un signal en échelle, qui permet de déplacer la lentille L du module optique MO d'une manière prédéterminée. Le contrôleur en boucle fermée est beaucoup plus complexe. Il comprend un module d'évaluation de qualité EQ, qui reçoit en entrée le signal I généré par le capteur d'image, et fournit à sa sortie une mesure de netteté n. Le bloc de commande en boucle fermée $K_{FB}$ comprend d'abord un bloc de calcul du gradient de netteté $\nabla n$ (plus précisément, de la dérivée de la netteté par rapport au paramètre de mise au point utilisé pour la commandé), un bloc « sign » de détermination du signe de ce

gradient, un gain $k_i$ qui change d'une itération à l'autre en fonction de la valeur du gradient et un intégrateur.

Sur la figure, « $V_{FF}$ » est le signal de commande en boucle ouverte, « $V_{FB}$ » le signal de commande en boucle fermée et « V » le signal de commande effectivement appliqué à l'actionneur AC ; V est égale à $V_{FF}$ ou à $V_{FB}$ en fonction de la position du commutateur. Typiquement le processeur PR, programmé de manière opportune, réalise les fonctions des contrôleurs en boucle ouverte, en boucle fermée et du commutateur : ces éléments ne correspondent donc pas nécessairement à des éléments matériels identifiables : on parle de réalisation logicielle. En variante, les contrôleurs peuvent être réalisés de manière matérielle, à partir de circuits à logique programmable et/ou de circuits intégrés dédiés. Une réalisation hybride logicielle/matérielle est également possible.

Les étapes de calcul du gain en boucle fermée seront maintenant décrites en détail à l'aide des figures 5a et 5b.

Un aspect avantageux de l'invention est l'utilisation d'une approximation quadratique pour modéliser localement la caractéristique de netteté dans le voisinage du maximum, ce qui permet de simplifier très sensiblement les calculs à effectuer au cours de la phase en boucle fermée.

La netteté n est alors modélisée par :

$$n(V) = a \cdot V^2 + b \cdot V + c \qquad (1)$$

où a, b, c sont les paramètres du modèle. On supposera dans la suite - mais cela ne constitue aucunement une limitation - que le signal de commande V (ou $V_{FB}$, car on considère la phase de commande en boucle fermée) représente une tension appliquée à un actionneur AC modifiant la vergence ou la position de la lentille L.

Cette hypothèse sur l'allure de la courbe de netteté au voisinage du maximum n'est pas rigoureusement vérifiée dans le cas général. Néanmoins, elle permet d'obtenir une méthode efficace et simple à mettre en oeuvre pour pouvoir converger rapidement vers la netteté maximale une fois la boucle de contrôle refermée. En effet, les paramètres a, b, c du modèle quadratique de la courbe de netteté peuvent être obtenus de manière analytique à partir de trois points de mesure de netteté acquis au cours de la phase en boucle ouverte.

En variante, il est possible choisir un modèle plus complexe mais, compte tenu du nombre limité de points de mesure obtenus en boucle ouverte, cela expose au risque de sur-paramétrage. Pour limiter ce risque on peut, en exploitant toutes les mesures de netteté acquises en boucle ouverte, déterminer un modèle de type spline cubique (sous contrainte ou non). Par contre ce mode de réalisation alternatif engendre un coût de calcul supplémentaire. Le modèle quadratique retenu présente également l'intérêt de pouvoir être déterminé de manière analytique à partir du choix judicieux de trois points de mesures obtenus en boucle ouverte. Alternativement, et en particulier si l'on effectue plus de mesures lors de la phase en boucle ouverte, on peut exploiter une méthode de détermination du modèle de la courbe de netteté de type moindres carrés, mais qui est plus coûteuse en termes de calculs.

Un autre aspect avantageux de l'invention est l'utilisation d'une loi de commande en boucle fermée adaptative dans laquelle le gain de l'intégrateur du contrôleur (ou correcteur) en boucle fermée et, par conséquent, le pas de l'actionneur, varient en fonction de la proximité au maximum de la netteté. Plus précisément, dans un mode de réalisation de l'invention, l'information mesurée dans la phase en boucle fermée est utilisée pour initialiser le gain du contrôleur. Cette information se trouve dans le gradient de la courbe de netteté, cette dernière étant modélisée par la fonction quadratique de l'équation 1. Ce gradient est donné par

$$\frac{\partial n(V)}{\partial V} = 2aV + b \qquad (2)$$

On voit qu'il existe une unique tension V* correspondant à un gradient nul :

$$V^* = -\frac{b}{2a} \qquad (3)$$

L'application de cette tension à l'actionneur permet de se déplacer vers le maximum de la netteté théorique, sous hypothèse d'une évolution de la netteté quadratique.

Dans la pratique, les paramètres a et b du modèle quadratique ne sont pas connus ; en revanche, on dispose de quelques points de mesure de la netteté acquis pour des tensions prédéfinies (phase en boucle ouverte). Ainsi, pour trouver les paramètres a et b, il est possible d'utiliser une méthode d'identification standard de type moindres carrés.

Cette méthode engendre un coût calcul non négligeable. Or, le but est de déterminer grossièrement la gamme de tension dans laquelle se situe la tension correspondant au maximum réel de netteté. Pour cette raison, en première approximation, il est proposé de s'affranchir d'une technique d'identification de paramètres de type moindres carrés. Pour cela, on retient trois points de mesures de la netteté obtenus en boucle ouverte $n_{max}$, $n_{left}$, $n_{right}$ qui sont respectivement, le point de mesure en boucle ouverte présentant la netteté maximale, le point directement à gauche et le point directement à droite (voir la partie supérieure de la figure 5a, où la tension V* calculée par l'équation 3 est indiquée $V_0^*$ pour des raisons qui seront explicitées plus loin). Ces trois points sont suffisants pour déterminer une parabole de façon unique. Cette approche est très simple, mais ne permet pas de filtrer les bruits de mesure.

Il est connu que l'abscisse pour laquelle la dérivée d'une parabole est égale à zéro se trouve au maximum (minimum) global. Sachant que la fonction qui décrit la netteté est convexe vers le haut, alors le terme « a » de l'équation 1 est inférieur à zéro. Dans ce cas on sait que le gradient zéro correspond au maximum global car la deuxième dérivée est négative. On pourrait s'interroger sur l'utilité d'utiliser le gradient de la netteté ($\nabla n$, sur les figures 5a et 5b) au lieu de la mesure directe de la netteté (n). Le problème de la mesure directe de la netteté est que les valeurs absolues sont totalement non-prédictibles et dépendent forcément de l'environnement de la prise de vue alors que les valeurs absolues du gradient convergent toujours vers zéro lorsque la tension s'approche de la tension correspondant au maximum de netteté. Cet avantage ouvre la possibilité d'appliquer des méthodes systématiques de détermination de la commande en boucle fermée.

Le premier problème à résoudre pour mettre en ouvre la commande en boucle fermée consiste donc à déterminer la tension correspondant au maximum de la netteté étant donnés trois points de mesure de netteté absolue et sous l'hypothèse que la courbe de netteté en fonction de la tension appliquée à l'actionneur est quadratique.

Ce problème peut être résolu en faisant appel au théorème de Lagrange sur la valeur moyenne : soit une fonction $f \in \mathbb{R}$, continue, définie sur l'intervalle $[x_1, x_2] \in \mathbb{R}$ ; il existe alors un point $x^* \in [x_1, x_2]$ tel que :

$$\frac{df(x)}{dx}\bigg|_{x^*} = \frac{f(x_2) - f(x_1)}{x_2 - x_1} \tag{4}$$

Plus précisément, on a recours au corollaire suivant de ce théorème : soit f(x)=ax²+bx+c avec $x, a, b, c \in \mathbb{R}$ ; alors

$$\frac{df(x)}{dx}\bigg|_{x^*} = \frac{f(x_2) - f(x_1)}{x_2 - x_1} \tag{5}$$

si et seulement si

$$x^* = \frac{x_2 + x_1}{2} \tag{5'}$$

Dans le contexte de recherche du gradient nul, ce corolaire est très utile car il permet d'obtenir les tensions qui correspondent à des niveaux des gradients calculées à partir de la mesure de la netteté sous l'hypothèse quadratique. Les trois points de mesure de netteté se transforment en deux points de gradient :

$$G_{left} = \frac{\partial n}{\partial V}\bigg|_{V=V_{grad}^{left}} = \frac{n^{max} - n^{left}}{V^{max} - V^{left}}$$

$$G_{right} = \frac{\partial n}{\partial V}\bigg|_{V=V_{grad}^{right}} = \frac{n^{right} - n^{max}}{V^{right} - V^{max}}$$

$$(6)$$

où les tensions $V_{grad}^{left}$ et $V_{grad}^{right}$ sont déterminées par l'application du corollaire :

$$V_{grad}^{left} = \frac{V^{max} + V^{left}}{2}$$

$$V_{grad}^{right} = \frac{V^{max} + V^{right}}{2}$$

$$(6')$$

Le gradient « nul » estimé se trouve donc sur une droite définie par les tensions calculées pour générer les gradients de la mesure. Cette droite est définie par :

$$\frac{\frac{\partial n}{\partial V} - \frac{\partial n(V_{grad}^{left})}{\partial V}}{\frac{\partial n(V_{grad}^{right})}{\partial V} - \frac{\partial n(V_{grad}^{left})}{\partial V}} = \frac{V - V_{grad}^{left}}{V_{grad}^{right} - V_{grad}^{left}}$$

$$(7)$$

Pour simplifier l'écriture, on pose $\mathcal{G} = \frac{\partial n(V)}{\partial V}$ et on obtient :

$$\frac{\mathcal{G} - \mathcal{G}_{left}}{\mathcal{G}_{right} - \mathcal{G}_{left}} = \frac{V - V_{grad}^{left}}{V_{grad}^{right} - V_{grad}^{left}}$$

$$(7')$$

Il s'ensuit que la tension V* correspondant à ce gradient nul (et donc au maximum estimé de netteté) est donnée par :

$$V^* = V_{grad}^{left} - \frac{\mathcal{G}_{left}}{\mathcal{G}_{right} - \mathcal{G}_{left}} \left( V_{grad}^{right} - V_{grad}^{left} \right) \tag{8}$$

En éliminant les variables intermédiaires, on obtient :

$$V^* = \frac{1}{2} \left[ V^{max} + V^{left} - \frac{\left( n^{max} - n^{left} \right) \left( V^{right} - V^{left} \right) \left( V^{right} - V^{max} \right)}{n^{left} \left( V^{right} - V^{max} \right) + n^{max} \left( V^{left} - V^{right} \right) + n^{right} \left( V^{max} - V^{left} \right)} \right] \tag{9}$$

Cela est illustré par les graphiques dans la partie supérieure de la figure 5a, où la valeur V* donnée par les équations (8) et (9) est indiquée par $V_0^*$.

En revenant à la figure 3, on rappelle que le bloc de commande en boucle fermée $K_{FB}$ comprend un intégrateur (symbole « ∫ ») et un gain $k_i$ variable, adapté à chaque instant « i » d'échantillonnage. La loi de commande mise en oeuvre par le bloc $K_{FB}$ peut donc s'écrire :

$$K_{FB} : V_{FB} = k_i^{int} \sum_{l=0}^{i} sign \left( \mathcal{G}_l \right) \Delta t$$

où $k_i^{int}$ est la valeur du gain adapté à l'instant i, $\mathcal{G}_l$ le gradient calculé à partir de deux tensions voisines à l'entrée du module optique et des valeurs de la netteté n correspondantes et $\Delta t$ le pas d'échantillonnage temporel. Comme on opère en temps discret, l'intégration est en fait une somme pondérée par $\Delta t$.

Puisque l'hypothèse quadratique n'est pas toujours réaliste il est proposé, conformément à un mode de réalisation avantageux de l'invention, d'utiliser un gain $k_i^{int}$ modifié à chaque instant d'échantillonnage (c'est-à-dire à chaque fois que l'indicateur de netteté est calculé dans le fonctionnement en boucle fermée) en prenant en compte toutes les mesures qui ont été effectuées au cours de la phase en boucle fermée, dans laquelle le gradient de la netteté peut être considéré linéaire. Cette approche est radicalement différente des méthodes de commande adaptative connues de l'art antérieur, car le gain $k_i^{int}$ est choisi de façon à annuler le gradient calculé à partir de mesures directes, sous l'hypothèse d'une évolution quadratique de la netteté.

Ainsi, le gain adaptatif $k_i^{int}$ pour le fonctionnement en boucle fermée est calculé en utilisant l'approche de recherche du gradient nul suivant l'approche présentée sur la figure 5a. On remarque que sur cette figure les valeurs mesurées de netteté sont représentées par des étoiles, tandis que les valeurs calculées des gradients, et les valeurs estimées de netteté correspondant à ces gradients, sont représentées par des cercles, et qu'un triangle représente l'estimation de la valeur de tension correspondant à la netteté maximale.

La condition initiale de la phase en boucle fermée est donnée par la tension $V_{max}$ testée en boucle ouverte qui maximise la netteté. Ensuite, l'application de l'équation 9 permet de trouver la valeur de tension $V_0^* = V^*$ qui correspond à un gradient de netteté nul, et donc au maximum théorique de la netteté sous l'hypothèse quadratique.

Ainsi, le gain de l'intégrateur optimal qui annule le gradient théorique pour le premier pas d'avancement en boucle fermée est défini par :

$$k_0^{int} = \left| V_0^* - V_{FF}^{end} \right| \tag{10}$$

où $V_0^*$ est donné par

$$V_0^* = \frac{1}{2} \left[ V^{max} + V^{left} - \frac{\left( n^{max} - n^{left} \right) \left( V^{right} - V^{left} \right) \left( V^{right} - V^{max} \right)}{n^{left} \left( V^{right} - V^{max} \right) + n^{max} \left( V^{left} - V^{right} \right) + n^{right} \left( V^{max} - V^{left} \right)} \right]$$

(cf. équation 9), tandis que $V_{FF}^{end}$ est la tension de commande à la fin de la phase en boucle ouverte. Si l'hypothèse quadratique était rigoureusement vérifiée, et si les mesures de netteté n'étaient pas affectées par le bruit, le procédé selon l'invention pourrait s'arrêter ici ; mais cela n'est généralement pas le cas.

En appliquant la tension $V_0^*$ à l'actionneur, on peut acquérir une nouvelle valeur de netteté. On dispose ainsi de quatre mesures de netteté, qui permettent de calculer trois valeurs de gradient, ainsi que les tensions correspondantes données par le corollaire du théorème de Lagrange (équation 5') ; ces valeurs de gradient sont celles déterminées en précédence ($G_{left}$, $G_{right}$), plus une nouvelle valeur indiquée par $G_2$. En théorie, ces trois points de gradient devraient être situés sur la droite donnée par l'équation 7, mais cela n'est pas le cas en pratique (car l'hypothèse quadratique n'est qu'une approximation et les mesures sont affectées par le bruit). Comme le montrent les graphiques dans la partie en bas à droite de la figure 5a, trois points de gradients non alignés permettent d'identifier trois droites dont la moyenne (représentée en trait pointillé) est choisie comme « droite des gradients » pour la 2e itération de la phase en boucle fermée. On indique par $V_1^*$ la valeur de tension pour lequel cette droite moyenne intercepte l'axe des abscisses : cela constitue une nouvelle approximation du point de gradient de netteté nul (et donc de netteté maximale). La nouvelle valeur du gain du contrôleur est donnée par :

$$k_1^{int} = |V_1^* - V_0^*| \qquad (10')$$

En appliquant la tension $V_1^*$ à l'actionneur, on peut acquérir une nouvelle valeur de netteté. On dispose ainsi de cinq mesures de netteté, qui permettent de calculer quatre valeurs de gradient, ainsi que les tensions correspondantes données par le corollaire du théorème de Lagrange (équation 5'). Comme lors de l'itération précédente, ces quatre points ($V$, $\nabla n$) ne sont pas alignés, et permettent d'identifier six différentes droites de gradient, dont on prend la moyenne pour déterminer une nouvelle approximation du point de gradient de netteté nul (et donc de netteté maximale), désignée par $V_3^*$ et ainsi de suite. La partie en bas à droite de la figure 5a illustre la situation après la troisième itération.

D'une manière générale, le gain à la i-ème itération (avec i≥1) est donné par :

$$k_i^{int} = \left| V_i^* - V_{i-1}^* \right| \qquad (11)$$

où $V_i^*$ est la valeur de tension V qui annule le gradient moyen $\hat{G}$.

Il est possible de donner une expression analytique générale pour la droite du gradient moyen $\hat{G}$ pour chaque itération de la phase en boucle fermée, et donc aussi pour $V_i^*$ pour tout i≥0. Pour ce faire, il faut d'abord définir le vecteur $V_I = (V_0\ V_1, ..., V_i)$ dont les éléments $V_l$ sont les valeurs de la tension de commande calculées lors des itérations précédentes de la phase en boucle fermée, ainsi que les tensions « d'initialisation » $V^{max}$, $V^{left}$ et $V^{right}$ obtenues lors de la phase en boucle ouverte ; on comprend que la dimension du vecteur $V_I$ augmente tout au long de la phase en boucle fermée. Ainsi, lors de la première itération (i=1) on a: ($V_0 = V^{left}$ ; $V_1 = V^{max}$ ; $V_2 = V_0^*$ ; $V_3 = V^{right}$) ; ces données permettent de calculer $V_1^*$, qui sera intégré au vecteur $V_I$ (moyennant une réorganisation de ses éléments pour préserver l'ordre croissant), et ainsi de suite.

On a

$$\hat{G} = \frac{1}{i+1} \sum_{l=0}^{i} \left( G_l - V_l \frac{G_{l+1} - G_l}{V_{l+1} - V_l} + V \frac{G_{l+1} - G_l}{V_{l+1} - V_l} \right)$$

$$(12)$$

$$\mathcal{G}_l = \frac{n_{l+1} - n_l}{V_{l+1} - V_l}$$

avec où $n_l = n(V_l)$.

Ainsi, les pentes moyennées sont celles des droites qui relient des mesures de netteté correspondant à des valeurs de tension adjacentes. Cela est visible sur la partie basse de la figure 5a.

La somme qui apparait dans l'équation 12 réalise un filtrage passe-bas qui réduit l'influence du bruit affectant les mesures de netteté.

Si on écrit l'expression de la droite moyenne de gradient

$$\hat{\mathcal{G}} = \hat{a}_i V + \hat{b}_i$$

la pente moyenne $\hat{a}_i$ est donné par :

$$\hat{a}_i = \frac{2}{i+1} \sum_{l=0}^{i} \frac{\mathcal{G}_{l+1} - \mathcal{G}_l}{V_{l+1} - V_l}$$

$$= \frac{2}{i+1} \sum_{l=0}^{i} \frac{(V_{l+1} - V_l)(n_{l+2} - n_{l+1}) - (V_{l+2} - V_{l+1})(n_{l+1} - n_l)}{(V_{l+2} - V_{l+1})(V_{l+1} - V_l)(V_{l+2} - V_l)}$$

$$(13)$$

et l'ordonnée à l'origine $\hat{b}_i$ par :

$$\hat{b}_i = \frac{1}{i+1} \sum_{l=0}^{i} \left( \mathcal{G}_l - V_l \frac{\mathcal{G}_{l+1} - \mathcal{G}_l}{V_{l+1} - V_l} \right) =$$

$$= \frac{1}{i+1} \sum_{l=0}^{i} \left( \frac{n_{l+1} - n_l}{V_{l+1} - V_l} - (V_l + V_{l+1}) \frac{(V_{l+1} - V_l)(n_{l+2} - n_{l+1}) - (V_{l+2} - V_{l+1})(n_{l+1} - n_l)}{(V_{l+2} - V_{l+1})(V_{l+1} - V_l)(V_{l+2} - V_l)} \right)$$

$$(14)$$

et

$$V_i^* = -\frac{\hat{b}_i}{\hat{a}_i}$$

$$(15)$$

L'équation 15, avec les équations 13 et 14, permet de calculer les valeurs de $V_i^*$ pour tout $i \geq 0$ ; en effet, l'équation 9 s'obtient comme cas particulier de l'équation 15 pour i=0.

Il convient de noter qu'en général la droite de gradient moyenne (équations 12 à 14) ne coïncide pas exactement avec l'approximation linéaire du gradient au sens des moindres carrés. Néanmoins, on constate de manière empirique que plus le nombre des mesures est grand, plus la droite moyenne est proche de celle calculée par la méthode des moindres carrés, ce qui justifie la méthode proposée.

Pour diminuer l'influence du faible nombre de mesures sur la proximité de la droite moyenne par rapport à l'estimation linéaire de type moindres carrés classiques, un mode de réalisation alternatif propose l'utilisation de la droite médiane, dont la pente peut être estimée à l'aide de l'équation suivante :

$$\hat{a}_i = \frac{1}{M} \sum_{(i,j) \in \Omega} \frac{\mathcal{G}_i - \mathcal{G}_j}{V_i - V_j}$$

(16)

et le biais médian par

$$\hat{b}_i = \frac{1}{N-1} \sum_{l=1}^{N-1} \left( \mathcal{G}_l - \hat{a}V_l \right).$$

(16')

M étant le nombre des lignes qui connectent N points de façon « tous avec tous » défini par M=i(i-1)/2 et $\Omega$ est l'ensemble de tous les couples d'indices *i* et *j* non-répétés.

La commande peut être considérée comme ayant atteint le point de fonctionnement optimal (i.e. le focus optimal est atteint) dans le cas où l'incrément de la tension V* est négligeable d'un instant d'échantillonnage à l'autre, ou bien encore cet incrément est plus faible que la discrétisation que l'on utilise pour les tensions d'alimentation de l'actionneur de la lentille.

Il faut maintenant considérer deux cas où la mise en oeuvre de l'invention peut s'avérer problématique.

Le premier est celui - apparemment favorable - où la tension correspondant au maximum de netteté mesuré lors de la phase en boucle ouverte, $V^{max}$, est proche (voire identique, compte tenu du fait que les tensions sont discrétisées) de celle calculée lors de la première application du modèle quadratique, $V_0^*$. Puisque le comportement de la courbe de netteté dans les cas réels possède une sensibilité forte au bruit, le gradient calculé peut être fortement perturbé et la position du gradient zéro que l'on recherche peut être fortement faussée. Une possible solution pour remédier à ce problème est d'appliquer une commande $V_0 + \Delta V$ pour l'initialisation de la boucle fermée où $\Delta V$ serait une tension minimale applicable à gauche ou à droite de la tension $V_0^* = V^{max}$. En d'autres termes, si la tension calculée $V_0^*$ s'avère trop proche de $V^{max}$, on la modifie légèrement. Le signe de $\Delta V$ est défini comme :

$$\text{sign} (\Delta V) = \text{sign} (V^{max} - V_0^*).$$

En cas de confirmation de l'hypothèse quadratique de la netteté, c'est-à-dire si la netteté mesurée pour une tension de commande $V_0^* + \Delta V$ est suffisamment proche de celle mesurée en correspondance de $V_0^*$, la phase de commande en boucle fermée est arrêtée. Autrement, le processus itératif décrit en précédence est appliqué pour trouver la tension qui correspond à un gradient de netteté (approximativement) nul.

Le deuxième cas est celui dans lequel l'hypothèse quadratique n'est pas vérifiée, même de façon approchée. Cela peut se vérifier non seulement à cause d'une configuration particulière de la scène ou du module optique, mais aussi dans le cas où les objets présents dans la zone d'intérêt sont en mouvement. Dans ce cas, l'évolution de la netteté en fonction de la tension appliquée à l'actionneur, modélisée par une parabole (courbe quadratique), ne permet pas de converger vers le maximum de netteté de manière efficace puisque le choix du gain en boucle fermée est réalisé de manière à se déplacer vers le pic de netteté moyenne qui sous-entend un biais (déplacement) faible de la parabole à chaque mesure. Ceci implique que la puissance focale qui sera choisie pour la mise au point in fine ne sera pas celle qui maximise la netteté.

Pour éviter cette situation, on suggère de choisir le gain en boucle fermée comme une moyenne glissante, c'est-à-dire de prendre en considération seulement les L dernières mesures qui ont été effectuées au cours de la phase en boucle fermée. Cette approche permet de réaliser un effet de filtrage passe-bas sur la modification de la tension $V_i^*$ d'un instant à l'autre. Les mesures qui ont été effectuées en dehors de L instants précédents ne sont pas prises en compte pour le calcul du gain $k_i^{int}$. Le calcul du gain se fait donc de la manière suivante (pour le mode de réalisation utilisant une droite des gradients moyenne, cf. figure 5a et équations 13 à 15) :

$$\hat{a}_i = \frac{2}{L+1} \sum_{l=0}^{L} \frac{G_{i-l+1} - G_{i-l}}{V_{i-l+1} - V_{i-l}} =$$

$$= \frac{2}{L+1} \sum_{l=0}^{L} \frac{(V_{i-l+1} - V_{i-l})(n_{i-l+2} - n_{i-l+1}) - (V_{i-l+2} - V_{i-l+1})(n_{i-l+1} - n_{i-l})}{(V_{i-l+2} - V_{i-l+1})(V_{i-l+1} - V_{i-l})(V_{i-l+2} - V_{i-l})}$$

$$(17)$$

$$\hat{b}_i = \frac{1}{L+1} \sum_{l=0}^{L} \left( G_{i-l} - V_{i-l} \frac{G_{i-l+1} - G_{i-l}}{V_{i-l+1} - V_{i-l}} \right) = = \frac{1}{L+1} \sum_{l=0}^{L} \left( \frac{n_{i-l+1} - n_{i-l}}{V_{i-l+1} - V_{i-l}} - \right.$$

$$- (V_{i-l}$$

$$\left. + V_{i-l+1}) \frac{(V_{i-l+1} - V_{i-l})(n_{i-l+2} - n_{i-l+1}) - (V_{i-l+2} - V_{i-l+1})(n_{i-l+1} - n_{i-l})}{(V_{i-l+2} - V_{i-l+1})(V_{i-l+1} - V_{i-l})(V_{i-l+2} - V_{i-l})} \right)$$

$$(18)$$

$$V_i^* = -\frac{\hat{b}_i}{\hat{a}_i}$$

$$(19)$$

où $1 < L < i$ définit la taille de la fenêtre glissante en nombre d'échantillons. Le choix de L permet d'imposer une bande passante plus ou moins importante (donc de moduler l'effet du filtrage passe-bas) en fonction du module optique utilisé (niveau de bruit du capteur d'image, caractéristiques optiques des lentilles). L'utilisation de cette amélioration dans le choix du gain en boucle fermée permet de rendre la méthode plus robuste vis-à-vis du comportement de la netteté lorsque l'hypothèse quadratique n'est pas satisfaite.

On peut remarquer que les équations 13 à 15 peuvent être considérées un cas spécial des équations 17 à 19, correspondant au cas L=i.

L'utilisation d'une fenêtre glissante est également possible pour le mode de réalisation utilisant une droite des gradients médiane, cf. figure 5b et équations 16, 16'. On a dans ce cas :

$$\hat{a}_i = \frac{1}{M} \sum_{(i,j) \in \Omega} \frac{G_i - G_j}{V_i - V_j}$$

$$(20)$$

$$\hat{b}_i = \frac{1}{L-1} \sum_{l=1}^{L-1} (G_l - \hat{a} V_l)$$

$$(20')$$

$\Omega$ étant désormais défini comme l'ensemble de tous les couples d'indices non-répétés, en considérant seulement les L derniers indices (indices compris entre « i-L » et « i » pour i>L, et tous les indices pour i≤L).

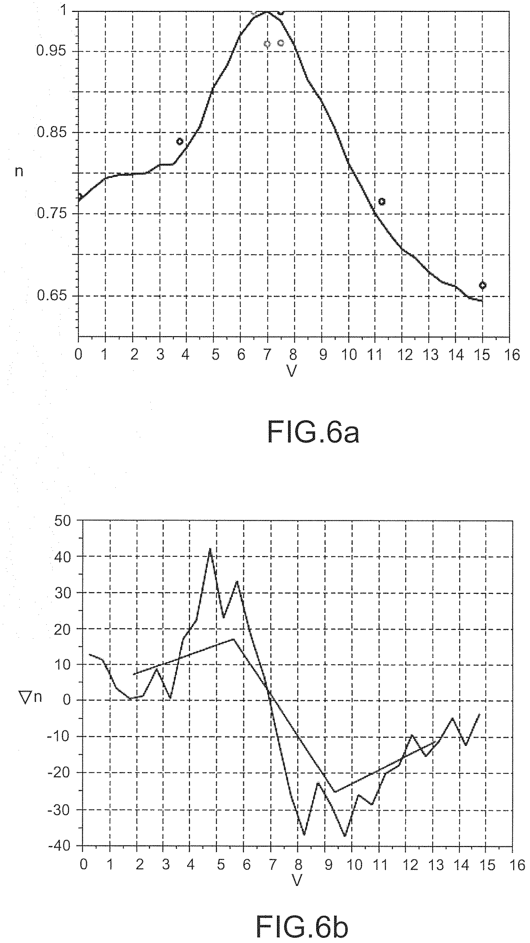

Le résultat technique de l'invention sera maintenant illustré à l'aide des figures 6a à 8b.

La figure 6a montre la courbe de netteté (netteté relative, normalisée à 1, en fonction de la tension analogique de commande de l'actionneur) d'une caméra, mesurée en déplaçant la lentille avec un pas d'avancement très fin. Les points noirs correspondent aux acquisitions réalisées lors de la phase de commande en boucle ouverte et les points gris aux différentes itérations de la phase en boucle fermée. A cause du bruit, ces points ne sont pas exactement situés sur la courbe. La figure 6b montre le gradient de la netteté, obtenu en dérivant la courbe de netteté (courbe continue) et calculé au cours de la phase en boucle fermée sur la base de l'hypothèse quadratique (ligne brisée). On remarque que si l'approximation du gradient est relativement grossière, l'estimation de la tension annulant $\nabla$n est remarquablement bonne.

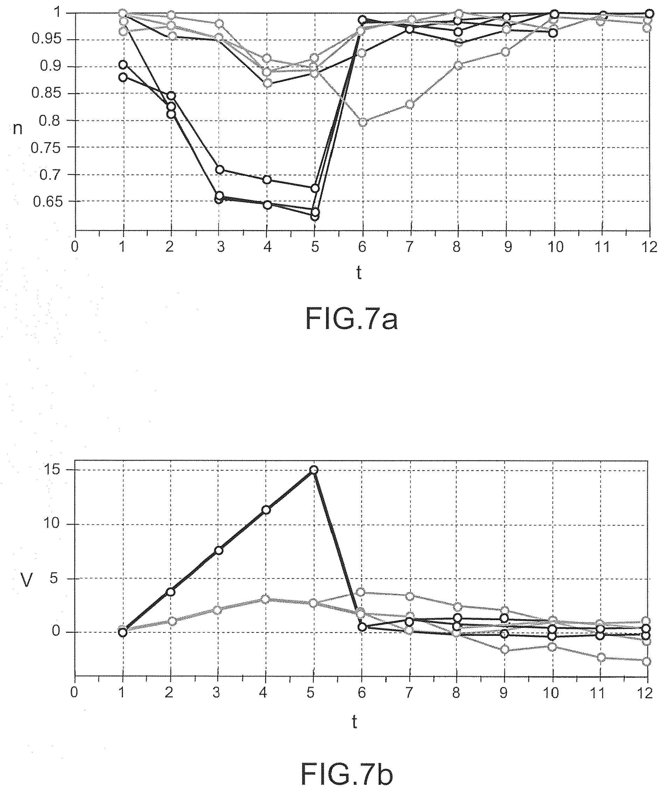

La figure 7a montre comment évolue dans le temps la netteté d'une image (l'arête d'une porte à une distance de 3,5 m de la lentille de la caméra) au cours du procédé de mise au point de l'invention (lignes noires) et d'un procédé connu de l'art antérieur (lignes grises) dit de recherche binaire, dans lequel le pas d'avancement est divisé par deux à chaque fois que le pic de netteté est franchi : voir N. Kehtarnavaz et H.-J. Oh « Development and real-time implementation of a rule-based auto-focus algorithm » Real-Time Imaging, 9(3) : 197-203, 2003. La figure 7b montre l'évolution de la tension analogique de commande de l'actionneur pour ces deux cas de figure. On peut voir que, dans le cas du procédé selon l'invention, les 5 premiers coups d'horloge correspondent à la phase en boucle ouverte, au cours de laquelle la lentille se déplace de manière unidirectionnelle. Au temps t=6, la lentille se positionne au maximum « provisoire » identifié au cours de la phase en boucle ouverte ; suivent 6 itérations en boucle fermée. La mise au point a été répétée plusieurs fois avec les deux méthodes ; on peut remarquer une moindre variabilité dans le cas de l'invention, qui traduit une moindre sensibilité au bruit.

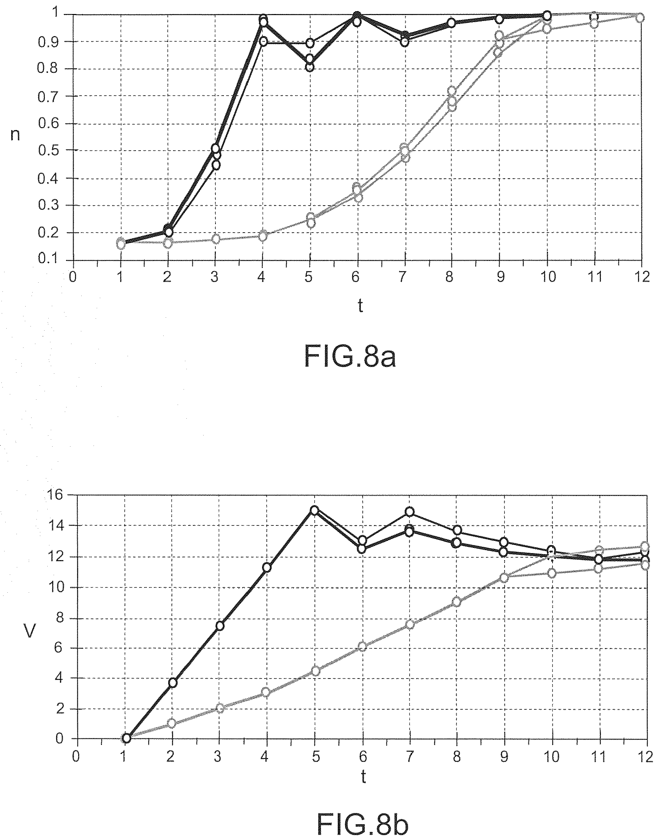

Les figures 8a et 8b correspondent au cas où l'objet imagé est une mire située à 5m de la lentille. Dans ce cas on peut remarquer que le procédé de l'invention conduit à une convergence beaucoup plus rapide que celle connue de l'art antérieur (recherche binaire, comme dans le cas des figures 7a, 7b)..

Pour la réalisation des figures 7a à 8b, une mesure de netteté basée sur la transformée de Haar et sur la notion de contraste local a été utilisée. Voir par exemple l'article de M. Trivedi, A. Jaiswal et V. Bhateja « A no-reference image quality index for contrast and sharpness measurement », 3rd International Advance Computing Conference (IACC), 2013 IEEE, pages 1234-1239, Février 2013.

**Revendications**

1.  Procédé de mise au point automatique d'une caméra comprenant un capteur d'images (CMI), au moins une lentille (L) configurée pour projeter une image sur ledit capteur et un actionneur (AC) configuré pour modifier un paramètre de mise au point de la lentille (f), le procédé comportant :

    - une première phase comprenant :

        ◦ un pilotage en boucle ouverte dudit actionneur, pour que ledit paramètre de mise au point prenne successivement une pluralité de valeurs prédéfinies ;
        ◦ l'acquisition d'une pluralité d'images au moyen dudit capteur, correspondant chacune à une dite valeur prédéfinie du paramètre de mise au point ; et
        ◦ le calcul d'un indicateur de netteté (n) à partir de chacune desdites images ;

    **caractérisé en ce qu'**il comporte également :

    - une deuxième phase de pilotage en boucle fermée dudit actionneur pour maximiser ledit indicateur de netteté ;

    ladite deuxième phase de pilotage en boucle fermée étant mise en oeuvre en utilisant une loi de commande et des conditions d'initialisation déterminées à partir des indicateurs de netteté calculés lors de ladite première phase.

2.  Procédé selon la revendication 1 dans lequel ladite deuxième phase de pilotage en boucle fermée est initialisée par la valeur du paramètre de mise au point qui correspond à la valeur la plus élevée de l'indicateur de netteté calculée au cours de ladite première phase.

3.  Procédé selon l'une des revendications précédentes dans lequel ladite deuxième phase de pilotage en boucle fermée utilise une loi de commande présentant un gain adaptatif.

4.  Procédé selon la revendication 3 dans lequel ladite deuxième phase de pilotage en boucle fermée réalise une maximisation itérative de l'indicateur de netteté basée sur une relation quadratique estimée reliant ledit indicateur de netteté et ledit paramètre de mise au point.

5.  Procédé selon la revendication 4 dans lequel ladite deuxième phase de pilotage en boucle fermée comprend, à chaque itération, une actualisation de ladite relation quadratique estimée pour tenir compte d'une valeur d'indicateur de netteté déterminée lors de l'itération précédente.

**6.** Procédé selon la revendication 5 dans lequel ladite deuxième phase de pilotage en boucle fermée comprend les étapes suivantes :

a) la détermination, parmi les valeurs prédéfinies du paramètre de mise au point utilisées lors de ladite première phase, de celle correspondant à la valeur la plus élevée de l'indicateur de netteté calculée au cours de ladite première phase, indiquée par $V^{max}$ ; de celle immédiatement supérieure indiquée par $V^{right}$ ; et de celle immédiatement inférieure indiquée par $V^{left}$ ;

b) le calcul d'une valeur ($V_i^*$) du paramètre de mise au point maximisant une relation quadratique reliant ledit indicateur de netteté et ledit paramètre de mise au point, estimée à partir des valeurs du paramètre de mise au point précédemment déterminées et des valeurs correspondantes de l'indicateur de netteté ;

c) le pilotage dudit actionneur pour que le paramètre de mise au point prenne la valeur calculée lors de l'étape précédente ; l'acquisition, au moyen dudit capteur, d'une image correspondant à ladite valeur du paramètre de mise au point et le calcul d'un indicateur de netteté de ladite image ;

les étapes b) et c) étant répétées de manière itérative jusqu'à ce qu'une condition d'arrêt ne soit satisfaite.

**7.** Procédé selon la revendication 6 dans lequel le calcul de l'étape b) est réalisé par application d'une formule analytique.

**8.** Procédé selon la revendication 7 dans lequel, lors de ladite étape b), ladite valeur du paramètre de mise au point, désignée par $V_i^*$, est calculée en appliquant les formules :

$$\hat{a}_i = \frac{2}{L+1} \sum_{l=0}^{L} \frac{(V_{i-l+1} - V_{i-l})(n_{i-l+2} - n_{i-l+1}) - (V_{i-l+2} - V_{i-l+1})(n_{i-l+1} - n_{i-l})}{(V_{i-l+2} - V_{i-l+1})(V_{i-l+1} - V_{i-l})(V_{i-l+2} - V_{i-l})}$$

$$\hat{b}_i = \frac{1}{L+1} \sum_{l=0}^{L} \left( \frac{n_{i-l+1} - n_{i-l}}{V_{i-l+1} - V_{i-l}} - \right.$$
$$-(V_{i-l} + V_{i-l+1}) \left. \frac{(V_{i-l+1} - V_{i-l})(n_{i-l+2} - n_{i-l+1}) - (V_{i-l+2} - V_{i-l+1})(n_{i-l+1} - n_{i-l})}{(V_{i-l+2} - V_{i-l+1})(V_{i-l+1} - V_{i-l})(V_{i-l+2} - V_{i-l})} \right)$$

$$V_i^* = -\frac{\hat{b}_i}{\hat{a}_i}$$

où i est l'indice de l'itération en cours, L est un entier non négatif inférieur ou égal à i, $V_l$ est un élément du vecteur **$V_l$** comprenant les valeurs $V_i^*$ déterminées auparavant, ainsi que lesdites valeurs $V^{left}$, $V^{max}$, $V^{right}$, ces valeurs étant prises en ordre croissant, et $n_l$ est la valeur de l'indicateur de netteté mesuré lorsque le paramètre de mise au point prend la valeur $V_l$.

**9.** Procédé selon la revendication 7 dans lequel, lors de ladite étape b), ladite valeur du paramètre de mise au point, désignée par $V_i^*$, est calculée en appliquant les formules :

$$\hat{a}_i = \frac{1}{M} \sum_{(i,j) \in \Omega} \frac{\mathcal{G}_i - \mathcal{G}_j}{V_i - V_j}$$

$$\hat{b}_i = \frac{1}{L-1} \sum_{l=1}^{L-1} \left( \mathcal{G}_l - \hat{a} V_l \right)$$

$$V_i^* = -\frac{\hat{b}_i}{\hat{a}_i}$$

où i est l'indice de l'itération en cours, $\Omega$ l'ensemble de tous les couples d'indices *l* non répétées de valeurs comprises entre max(0,i-L) et i, L étant un entier non négatif inférieur ou égal à i, $V_l$ est un élément du vecteur $\mathbf{V_l}$ comprenant les valeurs $V_i^*$ déterminées auparavant, ainsi que lesdites valeurs $V^{left}$, $V^{max}$, $V^{right}$, ces valeurs étant prises en ordre croissant, $n_l$ est la valeur de l'indicateur de netteté mesuré lorsque le paramètre de mise au point prend la

valeur $V_l$ et $\mathcal{G}_l = \frac{n_{l+1} - n_l}{V_{l+1} - V_l}$.

**10.** Procédé selon l'une des revendications précédentes dans lequel ladite première phase comprend également une étape de sélection, par un utilisateur, d'une loi d'échantillonnage d'une plage de valeur du paramètre de mise au point, et dans lequel lesdites valeurs prédéfinies dudit paramètre de mise au point sont obtenues en échantillonnant ladite plage suivant ladite loi.

**11.** Procédé selon l'une des revendications précédentes dans lequel ledit paramètre de mise au point est choisi parmi :

- la position de la lentille par rapport au détecteur le long d'un axe optique ; et
- la vergence de la lentille.

**12.** Procédé selon l'une des revendications précédentes dans lequel, entre la fin de la première phase et le début de la deuxième phase, ledit actionneur est piloté pour que ledit paramètre de mise au point reprenne sa valeur initiale.

**13.** Système de mise au point automatique (AF) d'une caméra comprenant :

- un actionneur (AC) configuré pour modifier un paramètre de mise au point d'une lentille de la caméra ; et
- un processeur (PR) configuré pour recevoir en entrée un signal (I) représentatif d'une image acquise par un capteur d'image (CIM) de la caméra et pour produire à sa sortie un signal (V) de pilotage dudit actionneur ;

**caractérisé en ce que** ledit processeur est configuré ou programmé pour mettre en oeuvre un procédé selon l'une des revendications précédentes.

**14.** Caméra comprenant un capteur d'images (CMI), au moins une lentille (L) configurée pour projeter une image sur ledit capteur et un système de mise au point automatique (AF) selon la revendication 13 dont l'actionneur (AC) est configuré pour modifier un paramètre de mise au point de ladite lentille et le processeur (PR) est configuré pour recevoir en entrée un signal (I) représentatif d'une image acquise par ledit capteur.

**15.** Caméra selon la revendication 14 dans lequel ladite lentille (L) est une lentille à focale variable et ledit actionneur (AC) est configuré pour modifier la focale de la lentille.

**Patentansprüche**

**1.** Verfahren zum automatischen Scharfstellen einer Kamera, die einen Bildsensor (CMI), wenigstens eine Linse (L), konfiguriert zum Projizieren eines Bildes auf den Sensor, und einen Stellantrieb (AC) umfasst, konfiguriert zum Modifizieren eines Parameters zum Scharfstellen der Linse (f), wobei das Verfahren Folgendes beinhaltet:

- eine erste Phase, die Folgendes umfasst:

◦ Steuern des Stellantriebs im offenen Kreis, damit der Scharfstellparameter nacheinander mehrere vordefinierte Werte annimmt;
◦ Erfassen mehrerer Bilder mit dem Sensor, jeweils entsprechend einem vordefinierten Wert des Scharfstellparameters; und
◦ Berechnen eines Schärfeindikators (n) auf der Basis jedes der Bilder;

**dadurch gekennzeichnet, dass** es auch Folgendes beinhaltet:

- eine zweite Steuerphase des Stellantriebs, im geschlossenen Kreis, zum Maximieren des Schärfeindikators;

wobei die zweite Steuerphase im geschlossenen Kreis unter Nutzung eines Steuergesetzes und von Initialisierungsbedingungen durchgeführt wird, die auf der Basis der in der ersten Phase berechneten Schärfeindikatoren bestimmt wurden.

2. Verfahren nach Anspruch 1, bei dem die zweite Steuerphase im geschlossenen Kreis durch den Wert des Scharfstellparameters initialisiert wird, der dem höchsten in der ersten Phase berechneten Schärfeindikatorwert entspricht.

3. Verfahren nach einem der vorherigen Ansprüche, bei dem die zweite Steuerphase im geschlossenen Kreis ein Steuergesetz nutzt, das eine adaptive Verstärkung aufweist.

4. Verfahren nach Anspruch 3, bei dem die zweite Steuerphase im geschlossenen Kreis eine iterative Maximierung des Schärfeindikators auf der Basis einer geschätzten quadratischen Relation realisiert, die den Schärfeindikator und den Scharfstellparameter verbindet.

5. Verfahren nach Anspruch 4, bei dem die zweite Steuerphase im geschlossenen Kreis bei jeder Iteration eine Aktualisierung der geschätzten quadratischen Relation umfasst, um einen bei der vorherigen Iteration bestimmten Schärfeindikatorwert zu berücksichtigen.

6. Verfahren nach Anspruch 5, bei dem die zweite Steuerphase im geschlossenen Kreis die folgenden Schritte beinhaltet:

a) Bestimmen, unter den vordefinierten Werten des in der ersten Phase benutzten Scharfstellparameters, desjenigen Wertes, der dem höchsten in der ersten Phase berechneten Schärfeindikatorwert entspricht, angezeigt durch $V^{max}$; des nächsthöheren Wertes, angezeigt durch $V^{right}$; und des nächsttieferen Wertes, angezeigt durch $V^{left}$;
b) Berechnen eines Wertes ($V_i^*$) des Scharfstellparameters, der eine quadratische Relation maximiert, die den Schärfeindikator und den Scharfstellparameter verbindet, geschätzt auf der Basis der zuvor bestimmten Werte des Scharfstellparameters und der entsprechenden Werte des Schärfeindikators;
c) Steuern des Stellantriebs, so dass der Scharfstellparameter den im vorherigen Schritt berechneten Wert annimmt; Erfassen, mittels des Sensors, eines Bildes entsprechend dem Wert des Scharfstellparameters und Berechnen eines Schärfeindikators des Bildes;

wobei die Schritte b) und c) auf iterative Weise wiederholt werden, bis eine Stoppbedingung erfüllt ist.

7. Verfahren nach Anspruch 6, bei dem das Berechnen von Schritt b) durch Anwenden einer Analyseformel realisiert wird.

8. Verfahren nach Anspruch 7, bei dem in Schritt b) der Wert des Scharfstellparameters, mit $V_i^*$ bezeichnet, unter Anwendung der folgenden Formeln berechnet wird:

$$\hat{a}_i = \frac{2}{L+1} \sum_{l=0}^{L} \frac{(V_{i-l+1} - V_{i-l})(n_{i-l+2} - n_{i-l+1}) - (V_{i-l+2} - V_{i-l+1})(n_{i-l+1} - n_{i-l})}{(V_{i-l+2} - V_{i-l+1})(V_{i-l+1} - V_{i-l})(V_{i-l+2} - V_{i-l})}$$

$$\hat{b}_i = \frac{1}{L+1} \sum_{l=0}^{L} \left( \frac{n_{i-l+1} - n_{i-l}}{V_{i-l+1} - V_{i-l}} - \right.$$

$$\left. -(V_{i-l} + V_{i-l+1}) \frac{(V_{i-l+1} - V_{i-l})(n_{i-l+2} - n_{i-l+1}) - (V_{i-l+2} - V_{i-l+1})(n_{i-l+1} - n_{i-l})}{(V_{i-l+2} - V_{i-l+1})(V_{i-l+1} - V_{i-l})(V_{i-l+2} - V_{i-l})} \right)$$

$$V_i^* = -\frac{\hat{b}_i}{\hat{a}_i}$$

wobei i der Index der laufenden Iteration ist, L eine nicht negative ganze Zahl gleich oder kleiner als i ist, $V_l$ ein Element des Vektors $\mathbf{V_l}$ ist, umfassend die zuvor bestimmten Werte $V_i^*$ sowie die Werte $V^{left}$, $V^{max}$, $V^{right}$, wobei diese Werte in aufsteigender Reihenfolge genommen werden, und $n_l$ der Wert des gemessenen Schärfeindikators ist, wenn der Scharfstellparameter den Wert $V_l$ annimmt.

9.  Verfahren nach Anspruch 7, bei dem in Schritt b) der Wert des Scharfstellparameters, mit $V_i^*$ bezeichnet, unter Anwendung der folgenden Formeln berechnet wird:

$$\hat{a}_i = \frac{1}{M} \sum_{(i,j)\in\Omega} \frac{\mathcal{G}_i - \mathcal{G}_j}{V_i - V_j}$$

$$\hat{b}_i = \frac{1}{L-1} \sum_{l=1}^{L-1} \left( \mathcal{G}_l - \hat{a}V_l \right)$$

$$V_i^* = -\frac{\hat{b}_i}{\hat{a}_i}$$

wobei i der Index der laufenden Iteration ist, $\Omega$ die Gesamtheit aller nicht wiederholten Indexpaare *l* von Werten zwischen max(0,i-L) und i ist, wobei L eine nicht negative ganze Zahl gleich oder kleiner als i ist, $V_l$ ein Element des Vektors $\mathbf{V_l}$ ist, der die zuvor bestimmten Werte $V_i^*$ sowie die Werte $V^{left}$, $V^{max}$, $V^{right}$ umfasst, wobei diese Werte in aufsteigender Reihenfolge genommen werden, $n_l$ der Wert des gemessenen Schärfeindikators ist, wenn der Scharfstellparameter den Wert $V_l$ annimmt und $\mathcal{G}_l = \frac{n_{l+1} - n_l}{V_{l+1} - V_l}$ ist.

10. Verfahren nach einem der vorherigen Ansprüche, bei dem die erste Phase auch einen Schritt des Auswählens, durch einen Benutzer, eines Gesetzes des Abtastens eines Wertebereichs des Scharfstellparameters beinhaltet und bei dem die vordefinierten Werte des Scharfstellparameters durch Abtasten des Bereichs gemäß dem Gesetz erhalten werden.

11. Verfahren nach einem der vorherigen Ansprüche, bei dem der Scharfstellparameter ausgewählt wird aus:

   - der Position der Linse in Bezug auf den Detektor entlang einer optischen Achse; und
   - der Vergenz der Linse.

12. Verfahren nach einem der vorherigen Ansprüche, bei dem zwischen dem Ende der ersten Phase und dem Anfang der zweiten Phase der Stellantrieb so gesteuert wird, dass der Scharfstellparameter seinen Anfangswert wieder annimmt.

13. System zum automatischen Scharfstellen (AF) einer Kamera, das Folgendes umfasst:

- einen Stellantrieb (AC), konfiguriert zum Modifizieren eines Scharfstellparameters einer Linse der Kamera; und
- einen Prozessor (PR), konfiguriert zum Empfangen, am Eingang, eines Signals (I), das ein von einem Bildsensor (CIM) der Kamera erfasstes Bild repräsentiert, und zum Produzieren, am Ausgang, eines Signals (V) zum Steuern des Stellantriebs;

**dadurch gekennzeichnet, dass** der Prozessor zum Ausführen eines Verfahrens nach einem der vorherigen Ansprüche konfiguriert oder programmiert ist.

14. Kamera, die einen Bildsensor (CMI), wenigstens eine Linse (L), konfiguriert zum Projizieren eines Bildes auf den Sensor, und ein System zum automatischen Scharfstellen (AF) nach Anspruch 13 umfasst, dessen Stellantrieb (AC) zum Modifizieren eines Scharfstellparameters der Linse konfiguriert ist, und der Prozessor (PR) zum Empfangen, am Eingang, eines Signals (I) konfiguriert ist, das ein vom Sensor erfasstes Bild repräsentiert.

15. Kamera nach Anspruch 14, bei der die Linse (L) eine Linse mit variablem Brennpunkt ist und der Stellantrieb (AC) zum Modifizieren des Brennpunkts der Linse konfiguriert ist.


**Claims**

1. Method for automatically focusing a camera comprising an image sensor (CMI), at least one lens (L) configured to project an image onto the sensor and an actuator (AC) configured to modify a focusing parameter of the lens (f), the method comprising:

   - a first phase comprising:

     ◦ open-loop control of the actuator so that the focusing parameter successively takes a plurality of predefined values;
     ◦ acquiring a plurality of images by means of the sensor, each corresponding to one predefined value of the focusing parameter; and
     ◦ calculating a sharpness indicator (n) on the basis of each of the images;

   **characterised in that** it also comprises:

   - a second phase of controlling, in a closed loop, the actuator so as to maximise the sharpness indicator;

   the second, closed-loop control phase being implemented by making use of a control law and initialisation conditions determined on the basis of the sharpness indicators calculated during the first phase.

2. Method according to claim 1, wherein the second, closed-loop control phase is initialised by the value of the focusing parameter which corresponds to the highest value of the sharpness indicator calculated during the first phase.

3. Method according to either of the preceding claims, wherein the second, closed-loop control phase uses a control law having an adaptive gain.

4. Method according to claim 3, wherein the second, closed-loop control phase carries out an iterative maximisation of the sharpness indicator based on an estimated quadratic relationship linking the sharpness indicator and the focusing parameter.

5. Method according to claim 4, wherein the second, closed-loop control phase comprises, in each iteration, an updating of the estimated quadratic relationship in order to take account of a sharpness indicator value determined during the preceding iteration.

6. Method according to claim 5, wherein the second, closed-loop control phase comprises the following steps:

   a) determining, from among the predefined values of the focusing parameter which are used during the first phase, the one that corresponds to the highest value of the sharpness indicator calculated during the first phase, denoted by $V^{max}$; the one immediately above, denoted by $V^{right}$; and the one immediately below, denoted by $V^{left}$;

b) calculating a value ($V_i^*$) of the focusing parameter which maximises a quadratic relationship linking the sharpness indicator and the focusing parameter, estimated on the basis of the previously determined values of the focusing parameter and the corresponding values of the sharpness indicator;

c) controlling the actuator so that the focusing parameter takes the value calculated during the preceding step; acquiring, by means of the sensor, an image corresponding to the value of the focusing parameter and calculating a sharpness indicator for the image;

steps b) and c) being repeated in an iterative manner until a stopping condition is satisfied.

7. Method according to claim 6, wherein the calculation of step b) is carried out by the application of an analytic formula.

8. Method according to claim 7, wherein, during step b), the value of the focusing parameter, which value is denoted by $V_i^*$, is calculated by applying the formulae:

$$\hat{a}_i = \frac{2}{L+1} \sum_{l=0}^{L} \frac{(V_{i-l+1} - V_{i-l})(n_{i-l+2} - n_{i-l+1}) - (V_{i-l+2} - V_{i-l+1})(n_{i-l+1} - n_{i-l})}{(V_{i-l+2} - V_{i-l+1})(V_{i-l+1} - V_{i-l})(V_{i-l+2} - V_{i-l})}$$

$$\hat{b}_i = \frac{1}{L+1} \sum_{l=0}^{L} \left( \frac{n_{i-l+1} - n_{i-l}}{V_{i-l+1} - V_{i-l}} - \right.$$

$$\left. -(V_{i-l} + V_{i-l+1}) \frac{(V_{i-l+1} - V_{i-l})(n_{i-l+2} - n_{i-l+1}) - (V_{i-l+2} - V_{i-l+1})(n_{i-l+1} - n_{i-l})}{(V_{i-l+2} - V_{i-l+1})(V_{i-l+1} - V_{i-l})(V_{i-l+2} - V_{i-l})} \right)$$

$$V_i^* = -\frac{\hat{b}_i}{\hat{a}_i}$$

where i is the index of the current iteration, L is a non-negative integer less than or equal to i, $V_l$ is an element of the vector $\mathbf{V_l}$ comprising the values $V_i^*$ determined previously and the values $V^{left}$, $V^{max}$, $V^{right}$, these values being taken in ascending order, and $n_l$ is the value of the sharpness indicator measured when the focusing parameter takes the value $V_l$.

9. Method according to claim 7, wherein, during the step b), the value of the focusing parameter, which value is denoted by $V_i^*$, is calculated by applying the formulae:

$$\hat{a}_i = \frac{1}{M} \sum_{(i,j) \in \Omega} \frac{\mathcal{G}_i - \mathcal{G}_j}{V_i - V_j}$$

$$\hat{b}_i = \frac{1}{L-1} \sum_{l=1}^{L-1} (\mathcal{G}_l - \hat{a}V_l)$$

$$V_i^* = -\frac{\hat{b}_i}{\hat{a}_i}$$

where i is the index of the current iteration, $\Omega$ is the set of all of the pairs of non-repeated indices $l$ with values between max(0,i-L) and i, L being a non-negative integer less than or equal to i, $V_l$ is an element of the vector $\mathbf{V_l}$ comprising the values $V_i^*$ determined previously and the values $V^{left}$, $V^{max}$, $V^{right}$, these values being taken in ascending order, $n_l$ is the value of the sharpness indicator measured when the focusing parameter takes the value $V_l$ and

$$G_l = \frac{n_{l+1} - n_l}{V_{l+1} - V_l}.$$

10. Method according to any one of the preceding claims, wherein the first phase also comprises a step of selection, by a user, of a law for sampling a range of values of the focusing parameter, and wherein the predefined values of the focusing parameter are obtained by sampling the range in accordance with the law.

11. Method according to any one of the preceding claims, wherein the focusing parameter is chosen from among:

- the position of the lens with respect to the detector along an optical axis; and
- the vergence of the lens.

12. Method according to any one of the preceding claims, wherein, between the end of the first phase and the beginning of the second phase, the actuator is controlled so that the focusing parameter regains its initial value.

13. System (AF) for automatically focusing a camera, comprising:

- an actuator (AC) configured to modify a focusing parameter of a lens of the camera; and
- a processor (PR) configured to receive, as input, a signal (1) representative of an image acquired by an image sensor (CIM) of the camera and to produce, at its output, a signal (V) for controlling the actuator;

**characterised in that** the processor is configured or programmed to implement a method according to any one of the preceding claims.

14. Camera comprising an image sensor (CMI), at least one lens (L) configured to project an image onto the sensor and an automatic focusing system (AF) according to claim 13 whose actuator (AC) is configured to modify a focusing parameter of the lens and the processor (PR) is configured to receive, as input, a signal (1) representative of an image acquired by the sensor.

15. Camera according to claim 14, wherein the lens (L) is a variable focus lens and the actuator (AC) is configured to modify the focal length of the lens.

FIG.1

FIG.3

FIG.2

n

Mode
« Paysage »

0                                    f ∝ $V_{FF}$

FIG.4a

n

Mode
« Macro »

0                                    f ∝ $V_{FF}$

FIG.4b

n

i = 5

i = 1

Mode
« Portait »

i = N = 9

0                                    f ∝ $V_{FF}$

FIG.4c

FIG.5a

26

FIG.5b

FIG.6a

FIG.6b

FIG.7a

FIG.7b

FIG.8a

FIG.8b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6292256 B

- US 2011069190 A

**Littérature non-brevet citée dans la description**

- **JIE HE et al.** Modified Fast Climbing Search Auto-focus Algorithm with Adaptive Step Size Searching Technique for Digital Camera. *IEEE Transaction on Consumer Electronics,* 2003, vol. 49 (2), 257-262
- **L.I.-C. CHIU et al.** An efficient auto focus method for digital still camera based on focus value curve prediction model. *Journal of Information Science and Engineering,* 2010, vol. 26 (4), 1261-1272
- **S. PERTUZ et al.** Analysis of focus measure operators for shape-from-focus. *Pattern Recognition,* 2013, vol. 46 (5), 1415-1432

- **N. KEHTARNAVAZ ; H.-J. OH.** Development and real-time implementation of a rule-based auto-focus algorithm. *Real-Time Imaging,* 2003, vol. 9 (3), 197-203
- A no-reference image quality index for contrast and sharpness measurement. **M. TRIVEDI ; A. JAISWAL ; V. BHATEJA.** 3rd International Advance Computing Conference (IACC), 2013. IEEE, Février 2013, 1234-1239